# NEUE EUROPÄISCHE PATENTSCHRIFT

(11) **EP 1 728 984 B2**
(45) Veröffentlichungstag und Bekanntmachung des Hinweises auf die Entscheidung über den Einspruch: **19.08.2015**
(45) Hinweis auf die Patenterteilung: 03.11.2010
(21) Anmeldenummer: 06111902.0
(22) Anmeldetag: 29.03.2006
(51) Int. Cl.: F01N 3/035, F01N 3/025, F01N 13/18

(54) **Abgasanlage**
Exhaust system
Dispositif d'échappement

(30) Priorität: 30.05.2005 DE 102005025045
(43) Veröffentlichungstag der Anmeldung: 06.12.2006
(73) Patentinhaber: Eberspächer Exhaust Technology GmbH & Co. KG, 66539 Neunkirchen (DE)
(72) Erfinder: Wörner, Siegfried, 73734, Esslingen (DE); Buhmann, Rudolf, 73732, Esslingen (DE); Lehnen, Rainer, 70328, Stuttgart (DE)
(74) Vertreter: BRP Renaud & Partner mbB Rechtsanwälte Patentanwälte Steuerberater

(56) Entgegenhaltungen:
- EP-A- 1 242 722
- EP-A- 1 270 889
- EP-A- 1 273 338
- EP-A- 1 321 641
- EP-A- 1 395 351
- EP-A1- 1 371 825
- EP-A2- 1 184 543
- EP-A2- 1 357 267
- EP-A2- 1 512 847
- WO-A-03/071104
- WO-A-2004/038192
- WO-A-2004/069388
- WO-A-2004/099578
- WO-A-2006/066043
- WO-A1-2004/018850
- DE-A1- 10 243 270
- DE-A1- 19 959 955
- DE-U1-202005 008 146
- US-A1- 2003 221 424
- US-A1- 2004 035 100
- US-A1- 2005 109 022
- US-B1- 6 554 321

## Beschreibung

Die vorliegende Erfindung betrifft eine Abgasanlage für eine Brennkraftmaschine, insbesondere in einem Kraftfahrzeug, mit den Merkmalen des Oberbegriffs des Anspruchs 1.

Um Schadstoffemission von Brennkraftmaschinen zu reduzieren, sind Abgasanlagen der Brennkraftmaschinen mit Abgasbehandlungseinrichtungen ausgestattet. Eine derartige Abgasbehandlungseinrichtung ist beispielsweise ein SCR-Katalysator, wobei SCR für Selektive Katalytische Reduktion steht. SCR-Katalysatoren werden dazu verwendet, mit Hilfe von Harnstoff Stickoxide (NOₓ) zu reduzieren. Des Weiteren sind Abgasbehandlungseinrichtungen bekannt, die als Partikelfilter ausgestaltet sind. Partikelfilter kommen hauptsächlich bei Dieselmotoren in Betracht und dienen dazu, die im Abgas mitgeführten Partikel aus dem Abgas abzuscheiden.

Aus der DE 102 43 270 A1 ist eine Abgasanlage für eine Brennkraftmaschine, insbesondere in einem Kraftfahrzeug, bekannt, die ein SCR-Modul sowie ein PF-Modul aufweist. Das SCR-Modul enthält in einem an einen Abgasstrang angeschlossenen SCR-Gehäuse zumindest ein SCR-Katalysatorelement. Das PF-Modul enthält in einem stromauf des SCR-Gehäuses an den Abgasstrang angeschlossenen PF-Gehäuse wenigstens ein Partikelfilterelement sowie wenigstens ein Pre-Oxidationskatalysatorelement. Ferner ist eine Brennstoffdosiereinrichtung vorgesehen, mit der ein Brennstoff stromauf des wenigstens einen Partikelfilterelements in den Abgasstrom einleitbar ist. Bei der bekannten Abgasanlage ist das Pre-Oxidationskatalysatorelement durch eine katalytische Beschichtung des Partikelfilterelements gebildet.

Aus der DE 199 59 955 A1 ist eine Einrichtung bekannt, die in einem Gehäuse eine katalytische Reinigungseinrichtung sowie ein Partikelfilter enthält, wobei der das Partikelfilter enthaltende Abschnitt austauschbar ausgestaltet ist.

Aus der WO 2004/069388 ist eine Abgasanlage bekannt, die eine Partikelverminderungseinheit, einen Reduktionsmitteltank und eine Stickoxidverminderungseinheit in Modulbauweise aufweist.

Die vorliegende Erfindung beschäftigt sich mit dem Problem, für eine Abgasanlage der eingangs genannten Art eine verbesserte Ausführungsform anzugeben, die sich insbesondere dadurch auszeichnet, dass sie besonders einfach an unterschiedliche Vorgaben einzuhaltender Emissionswerte adaptiert werden kann. Insbesondere soll eine Wartung der Abgasanlage vereinfacht werden.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Abgasanlage modular aufzubauen, so dass die Abgasanlage zumindest ein erstes Modul, z.B. ein SCR-Modul, sowie ein zweites Modul, z.B. ein PF-Modul, aufweist, wobei PF für Partikelfilter steht. Diese Module bilden voneinander separate und voneinander unabhängige Einheiten, die jeweils für sich hergestellt und in die Abgasanlage eingebaut werden. Die modular aufgebaute Abgasanlage zeichnet sich durch eine hohe Flexibilität im Hinblick auf ihre Anpassbarkeit an unterschiedliche Emissionsanforderungen aus. Wenn beispielsweise, nicht Gegenstand der Erfindung, für eine bestimmte Anwendung eine Partikelabscheidung aus den Abgasen nicht erforderlich ist, beispielsweise bei einem Benzinmotor oder bei einem Erdgasmotor, kann beispielsweise das PF-Modul weggelassen werden oder so modifiziert werden, dass es z.B. als Schalldämpfer arbeitet. Ebenso kann bei anderen Anwendung, bei denen vergleichsweise wenig Stickoxide anfallen, auf das SCR-Modul verzichtet werden; ebenso kann das SCR-Modul dahingehend modifiziert werden, dass es anstelle von SCR-Katalysatorelementen partikelmindernde Elemente enthält, so dass das SCR-Modul zusätzlich oder alternativ zum PF-Modul zur Partikelabscheidung aus den Abgasen genutzt werden kann. Darüber hinaus bietet erfindungsgemäß die modular aufgebaute Abgasanlage die Möglichkeit einer einfachen Nachrüstung oder Umrüstung der einzelnen Module bzw. der gesamten Abgasanlage.

Zum Austauschen des Partikelfilterelements kann der Mittelabschnitt des PF-Gehäuses separat herausgenommen werden, so dass das Pre-Oxidationskatalysatorelement im Eintrittsabschnitt verbleiben kann. Die Wartung bzw. der Austausch des Partikelfilterelements kann dadurch preiswerter realisiert werden.

Weitere wichtige Merkmale und Vorteile der Erfindung ergeben sich aus den beigefügten Unteransprüchen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, wie sie in den beigefügten Ansprüchen definiert ist.

Ein bevorzugtes Ausführungsbeispiel der Erfindung ist in der Zeichnung dargestellt und wird in der nachfolgenden Beschreibung näher erläutert.

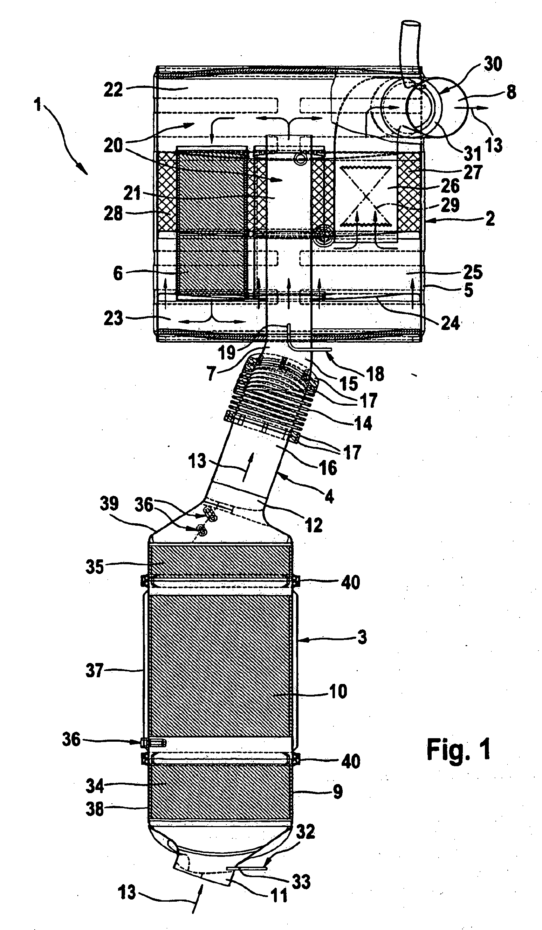

Die einzige Fig. 1 zeigt eine teilweise geschnittene Seitenansicht einer besonderen Ausführungsform einer Abgasanlage nach der Erfindung.

Fig. 1 zeigt eine erfindungsgemäße Abgasanlage 1 für eine nicht gezeigte Brennkraftmaschine, insbesondere eines Kraftfahrzeugs. Vorzugsweise findet die erfindungsgemäße Abgasanlage 1 Anwendung bei Dieselmotoren in Nutzfahrzeugen, wie z.B. Omnibusse und Lastkraftwagen.

Die Abgasanlage 1 kann mit Hilfe eines erfindungsgemäßen Modulssystems aufgebaut werden. Dieses Modulsystem umfasst hierzu ein erstes Moduls 2 sowie ein zweites Modul 3 und zumindest ein Verbindungsrohr 4. Das erste Modul 2 weist ein erstes Gehäuse 5 auf, in dem zumindest ein erstes Abgasbehandlungselement 6 angeordnet ist. Das erste Gehäuse 5 weist einen ersten Abgaseintritt 7 sowie einen ersten Abgasaustritt 8 auf, über die das erste Gehäuse 5 an einen hier nicht gezeigten Abgasstrang der Abgasanlage 1 anschließbar ist. Dieser Abgasstrang führt die Abgase der Brennkraftmaschine von der Brennkraftmaschine in die Umgebung.

Das Modulssystem umfasst für das erste Abgasbehandlungselement 6 verschiedene Varianten, die beim Aufbau des ersten Moduls 2 bzw. der Abgasanlage 1 alternativ und insbesondere austauschbar im ersten Gehäuse 2 montierbar sind. Bei den Varianten des ersten Abgasbehandlungselements 6 handelt es sich um wenigstens ein SCR-Katalysatorelement sowie um ein PM-Katalysatorelement. Dabei steht PM für partikelnmindernd. Bei einem PM-Katalysatorelement handelt es sich um ein bei seiner Durchströmung partikelmindernd wirkendes Element, das mit offenen Kanälen arbeitet. Die in der Abgasströmung mitgeführten Partikel lagern sich an Wänden der Kanäle des PM-Katalysatorelements ab, ohne dass hierbei die Gefahr einer Verstopfung der Kanäle des PM-Katalysatorelements besteht. Bei katalytisch aktiven Kanalwänden kommt es unter bestimmten Voraussetzungen zu einer Aufoxidation der abgelagerten Partikel. Hierdurch kann das PM-Katalysatorelement permanent passiv regeneriert werden.

Das erste Modul 2 kann somit in Abhängigkeit der ausgewählten Variante für das erste Abgasbehandlungselement 6 als SCR-Modul oder als partikelminderndes Modul ausgestaltet werden.

Das zweite Modul 3 weist ein zweites Gehäuse 9 auf, das zur Aufnahme wenigstens eines zweiten Abgasbehandlungselements 10 dient. Außerdem weist das zweite Gehäuse 9 einen zweiten Abgaseintritt 11 und einen zweiten Abgasaustritt 12 auf, über die das zweite Gehäuse 9 an den Abgasstrang anschließbar ist.

Auch für das zweite Abgasbehandlungselement 10 umfasst das Modulsystem mehrere verschiedene Varianten, die alternativ und vorzugsweise austauschbar im zweiten Gehäuse 9 montierbar sind. Diese Varianten des zweiten Abgasbehandlungselements 10 umfassen beispielsweise ein Wall-Flow-Partikelfilterelement. Im Unterschied zu einem PM-Katalysatorelement besitzt ein Wall-Flow-Partikelfilterelement geschlossene Kanäle, so dass der Abgasstrom gezwungen ist, poröse Kanalwände zu durchströmen. Hierbei werden die Partikel ausgefiltert und im Wandmaterial eingelagert. Hierbei setzt das sich Wall-Flow-Partikelfilterelement allmählich zu und muss daher permanent oder in zeitlichen Abständen regeneriert werden. Gegenüber einem PM-Katalysatorelement hat ein Wall-Flow-Partikelfilterelement zwar den Nachteil, dass sein Durchströmungswiderstand grundsätzlich stark ansteigen kann, jedoch ist in der Regel die Abscheidewirkung für Partikel beim Wall-Flow-Partikelfilterelement deutlich größer als bei einem PM-Katalysatorelement. Desweiteren können die Varianten des zweiten Abgasbehandlungselements ein PM-Katalysatorelement und/oder ein Schalldämpferelement und/oder ein Oxidationskatalysatorelement sein.

Mit Hilfe des Verbindungsrohrs 4 können nun die beiden Module 2, 3 miteinander verbunden werden, in dem das Verbindungsohr 4 den zweiten Abgasaustritt 12 mit dem ersten Abgaseintritt 7 verbindet. In Fig. 1 ist mit Pfeilen 13 eine Abgasströmung symbolisiert, die im Betrieb der Brennkraftmaschine die Abgasanlage 1 durchströmt. Vorzugsweise ist demnach das erste Modul 2 stromab des zweiten Moduls 3 im Abgasstrang angeordnet.

Bei der hier gezeigten, bevorzugten Ausführungsform ist das erste Modul 2 als SCR-Modul ausgestaltet, das im folgenden auch mit 2 bezeichnet wird. Demnach handelt es sich im gezeigten Ausführungsbeispiel beim ersten Abgasbehandlungselement 6 vorzugsweise um ein SCR-Katalysatorelement, das im folgenden ebenfalls mit 6 bezeichnet wird. Entsprechendes gilt auch für das erste Gehäuse 5, das im folgenden auch als SCR-Gehäuse 5 bezeichnet wird. Das jeweilige SCR-Katalysatorelement 6 kann beispielsweise ein Vanadium basierter oder Vanadium freier Katalysator sein oder einen entsprechend beschichteten Träger, z.B. aus Cordierit oder aus Metall, aufweisen oder als Vollextrudat ausgestaltet sein. Desweiteren kann durch eine spezielle Struktur der Substrate, insbesondere der Metallsubstrate, eine Quervermischung erreicht werden, die eine Verteilung und Durchmischung des Reduktionsmittels über dem Katalysatorquerschnitt verbessert. Durch diese Quervermischung können einerseits die NOₓ-Reduktion im SCR-Katalysatorelement 6 verbessert und andererseits die Menge an Harnstoff, die das SCR-Katalysatorelement 6 ohne Reaktion durchströmt, reduziert werden.

Desweiteren handelt es sich beim zweiten Modul 3 bei der hier gezeigten bevorzugten Ausführungsform um ein PF-Modul, das im folgenden auch mit 3 bezeichnet wird. Dabei steht PF für Partikelfilter. Dementsprechend wird das zweite Gehäuse 9 im folgenden auch als PF-Gehäuse 9 bezeichnet. Beim zweiten Abgasbehandlungselement 10 handelt es sich dementsprechend um ein Partikelfilterelement, das im folgenden auch mit 10 bezeichnet wird. Dabei umfasst der Begriff Partikelfilter beliebige Einrichtungen, die bei ihrer Durchströmung eine partikelmindernde Wirkung aufweisen. Insbesondere umfasst der Begriff Partikelfilterelement somit die weiter oben beschriebenen Wall-Flow-Partikelfilterelemente sowie die PM-Katalysatorelemente. Das als Wall-Flow-Partikelfilterelement ausgestaltete Partikelfilterelement 10 kann wahlweise aus Cordierit, Sintermetall, Silliciumcarbit oder aus einem anderen geeigneten Filtermaterial bestehen.

Die erfindungsgemäße Abgasanlage 1 umfasst somit das SCR-Modul 2 und das stromauf davon angeordnete PF-Modul 3, wobei die beiden Module 2, 3 über das Verbindungsrohr 4 miteinander verbunden sind.

Die beiden Module 2, 3 des Modulssystems sind hinsichtlich ihrer Funktion und Wirkungsweise auf einander abgestimmt, so dass die beiden Module 2, 3 vorzugsweise gleichzeitig zur Anwendung kommen und in eine Abgasanlage 1 eingebaut werden. Grundsätzlich sind, nicht Gegenstand der Erfindung, die einzelnen Module 2, 3 jedoch so ausgestaltet, dass sie auch einzeln, also jeweils für sich und ohne das jeweils andere Modul 2, 3 in eine Abgasanlage 1 eingebaut werden können, um dort eine Abgasreinigung zu realisieren, die weniger strengen Abgasvorschriften genügt. Besonders vorteilhaft ist jedoch, dass das jeweils fehlende Modul 2, 3 jederzeit nachrüstbar ist, um auf diese Weise das mit beiden Modulen 2, 3 ausgestattete Reinigungssystem in der jeweiligen Abgasanlage 1 zu realisieren.

Vorzugsweise, erfindungsgemäß, weist das Verbindungsrohr 4 zumindest ein Entkoppelelement 14 auf, das so gestaltet ist, dass die beiden Gehäuse 5, 9 mechanisch voneinander entkoppelt sind. Hierdurch können die beiden Gehäuse 5, 9 beispielsweise Relativbewegungen zueinander durchführen, ohne dass es dabei zu einer Beschädigung des Verbindungsrohrs 4 oder eines der Gehäuse 5, 9 kommt. Derartige Relativbewegungen können im Betrieb des mit der Abgasanlage 1 ausgestatteten Fahrzeugs auftreten. Ebenso kann das Entkoppelelement 14 thermische Ausdehnungseffekte kompensieren, die entstehen, da sich die Abgasanlage 1 im Betrieb aufgrund der auftretenden hohen Temperaturen ausdehnen kann.

Bei Entkoppelelement 14 kann es sich beispielsweise um ein flexibles Wellrohr handeln, das hier in das Verbindungsrohr 4 eingesetzt ist. Dementsprechend befindet sich das Entkoppelelement 14 bzw. das Wellrohr zwischen zwei daran angrenzenden Abschnitten 15, 16 des Verbindungsrohrs 4. Aufgrund der zu erwartenden hohen Temperaturen besteht das Wellrohr (Entkoppelelement 14) vorzugsweise aus einem geeigneten Metall. Das Wellrohr 14 ist über Rundflasche 17 mit den Abschnitten 15, 16 des Verbindungsrohrs 4 verbunden.

Das SCR-Modul 2 umfasst hier eine Harnstoffdosiereinrichtung 18, mit deren Hilfe Harnstoff stromauf des wenigstens einen SCR-Katalysatorelements 6 in den Abgasstrom 13 eingeleitet werden kann. Von der Harnstoffdosiereinrichtung 18 ist hier lediglich eine Einspritzdüse 19 zum Einbringen des Harnstoffs gezeigt, die im Bereich des ersten Abgaseintritts 7 angeordnet ist. Das SCR-Modul 2 weist im SCR-Gehäuse 5 außerdem eine Mischstrecke 20 auf, die sich zwischen der Einleitstelle für den Harnstoff, also zwischen der Einspritzdüse 19 und dem wenigstens einen SCR-Katalysatorelement 6 im SCR-Gehäuse 5 erstreckt. Diese Mischstrecke 20 umfasst hier ein Eintrittsrohr 21 sowie eine Eintrittskammer 22. Das Eintrittsrohr 21 verbindet innerhalb des SCR-Gehäuses 5 den ersten Abgaseintritt 7 mit der Eintrittskammer 22. In der Mischstrecke 20, also insbesondere im Eintrittsrohr 21 und/oder in der Eintrittskammer 22 kann wenigstens ein hier nicht gezeigtes passives Mischglied angeordnet sein, das bei seiner Umströmung oder Durchströmung eine intensive Durchmischung des eingebrachten Harnstoffs mit der Abgasströmung 13 bewirkt.

Die Abgase gelangen somit vom ersten Abgaseintritt 7 über das Eintrittsrohr 21 in die Eintrittskammer 22. Von der Eintrittskammer 22 gelangen die Abgase durch das wenigstens eine SCR-Katalysatorelement 6 in eine Sammelkammer 23. Die Sammelkammer 23 ist durch eine gasdurchlässige Trennwand 24 von einer Austrittskammer 25 getrennt. Die Gasdurchlässigkeit dieser Trennwand 24 wird beispielsweise über entsprechende Durchgangsöffnungen bzw. durch eine poröse Ausgestaltung der Trennwand 24 erreicht. Von der Austrittskammer 25 gelangt der Abgasstrom 13 durch ein Austrittsrohr 26 zum ersten Abgasaustritt 8.

Desweiteren enthält das SCR-Gehäuse 5 hier zusätzlich eine Dämpferkammer 27, die ein Dämpfermaterial 28 enthält und die zwischen der Eintrittskammer 22 und der Austrittskammer 25 angeordnet ist. Dabei sind das Austrittsrohr 26, das Eintrittsrohr 21 sowie das wenigstens eine SCR-Katalysatorelement 6 durch diese Dämpferkammer 27 hindurchgeführt. Das Austrittsrohr 26 ist innerhalb der Dämpferkammer 27 für Luftschall durchlässig ausgestaltet. Beispielsweise ist hierzu ein in der Dämpferkammer 27 verlaufender Abschnitt des Austrittsrohrs 26 mit einer Perforation 29 versehen. Obwohl im gezeigten Ausführungsbeispiel nur ein SCR-Katalysatorelement 6 deutlich erkennbar ist, enthält das SCR-Modul 2 zweckmäßig mehrere SCR-Katalysatorelemente 6, die parallel zueinander angeordnet sind und die parallel vom Abgasstrom 13 durchströmbar sind.

Schließlich kann das SCR-Modul 2 mit einer hier nicht gezeigten Sensorik ausgestattet sein, die insbesondere so ausgestaltet ist, dass damit im Abgasstrom 13 eine Temperatur, ein NOₓ-Gehalt und ein NH₃-Gehalt gemessen werden kann.

Bei der hier gezeigten, bevorzugten Ausführungsform umfasst das SCR-Modul 2 außerdem eine Abgaskühleinrichtung 30. Die Abgaskühleinrichtung 30 ist dabei stromab des wenigstens einen SCR-Katalysatorelements 6 angeordnet und dient zur Kühlung der aus dem ersten Abgasaustritt 8 austretenden Abgase. Vorzugsweise ist die Abgaskühleinrichtung 30 im Bereich des Austrittsrohrs 26 angeordnet. Die Abgaskühleinrichtung 30 kann hierzu eine Düsenanordnung 31 aufweisen, die im Austrittsrohr 26 angeordnet ist. Die Düsenanordnung 31 kann als Ringdüse ausgestaltet sein und kann insbesondere in eine Wandung des Austrittsrohrs 26 integriert sein. Über die Düsenanordnung 31 kann ein geeignetes Kühlmittel in den Abgasstrom 13 eingeleitet werden. Vorzugsweise handelt es sich beim Kühlmittel um Umgebungsluft; ebenso sind jedoch auch andere Kühlmittel denkbar.

Alternativ kann die Abgaskühleinrichtung 30 auch mit einem Kühlkanal ausgestattet sein, der von einem Kühlmittel durchströmbar ist. Dieser Kühlkanal kann z.B. mit einer Wandung des Austrittsrohrs 6 wärmeübertragend gekoppelt sein oder in diese Wandung integriert sein. Beispielsweise handelt es sich beim Kühlmittel dann um ein flüssiges Kühlmittel; insbesondere kann der Kühlkanal an einen Kühlkreis der Brennkraftmaschine angeschlossen sein.

Das PF-Modul 3 kann mit einer Brennstoffdosiereinrichtung 32 ausgestattet sein, von der hier lediglich eine Einspritzdüse 33 dargestellt ist. Mit Hilfe der Brennstoffdosiereinrichtung 32 kann ein Brennstoff, z.B. der Kraftstoff der Brennkraftmaschine, stromauf des wenigstens einen Partikelfilterelements 10 in den Abgasstrom 13 eingeleitet werden. Eine Brennstoffzuführung wird insbesondere dann benötigt, wenn zur Einleitung einer aktiven Regeneration des Partikelfilterelements 10 die Temperatur des Partikelfilterelements 10 auf eine Starttemperatur erhöht werden muss, bei der ein Abbrand der Partikelbeladung des Partikelfilterelements 10 beginnt. Damit der eingeleitete Brennstoff durch Oxidation die erwünschte Wärme abgeben kann, kann das Partikelfilterelement 10 katalytisch aktiv ausgestaltet sein. Bevorzugt wird jedoch die hier gezeigte Ausführungsform, bei der stromauf des wenigstens einen Partikelfilterelements 10 zumindest ein Pre-Oxidationskatalysatorelement 34 im PF-Gehäuse 9 angeordnet ist. Die Einleitung des Brennstoffs erfolgt dann stromauf dieses Pre-Oxidationskatalysatorelements 34.

Das wenigstens eine Pre-Oxidationskatalysatorelement 34 dient somit während einer aktiven Regeneration des Partikelfilterelements 10 als katalytischer Brenner. Daneben kann das Pre-Oxidationskatalysatorelement 34 auch als konventioneller Oxidationskatalysator dienen. Außerdem kann es als NO₂-Katalysator dienen, um eine kontinuierliche Regeneration des Partikelfilterelements 10 zu unterstützen. Insgesamt ermöglicht das Pre-Oxidationskatalysatorelement 34 eine Verbesserung der NO-absorbierenden Wirkung des SCR-Moduls 2.

Zusätzlich hat das PF-Modul 3 wie hier zumindest ein Post-Oxidationskatalysatorelement 35, das im PF-Gehäuse 9 stromab des wenigstens einen Partikelfilterelements 10 angeordnet ist. Mit Hilfe des Post-Oxidationskatalysatorelements 35 können Brennstoffreste, die beim Aufheizen des Partikelfilterelements 10 nicht oder nicht vollständig umgesetzt worden sind, aufoxidiert werden. Auch das wenigstens eine Post-Oxidationskatalysatorelement 35 kann zu einer Verbesserung der Funktion des SCR-Moduls 2 beitragen.

Darüber hinaus kann das PF-Modul 3 mit einer Sensorik 36 ausgestattet sein, mit deren Hilfe insbesondere die Temperatur im Abgasstrom 13 und/oder eine Differenzdruckmessung am wenigstens einen Partikelfilterelement 10 durchführbar ist. Über die Differenzdruckmessung kann der Beladungszustand des Partikelfilterelements 10 ermittelt werden.

Vorzugsweise besitzt das PF-Gehäuse 9 einen Mittelabschnitt 37, der zwischen einem Eintrittsabschnitt 38 und einem Austrittsabschnitt 39 angeordnet ist. Der Eintrittsabschnitt 38 umfasst den zweiten Abgaseintritt 11 und enthält wie hier zusätzlich das wenigstens eine Pre-Oxidationskatalysatorelement 34. Im Unterschied dazu weist der Austrittsabschnitt 39 den zweiten Abgasaustritt 12 auf und kann außerdem das wenigstens eine Post-Oxidationskatalysatorelement 35 enthalten. Der Mittelabschnitt 37 enthält das wenigstens eine Partikelfilterelement 10 und ist mit Hilfe von Befestigungselementen 40 austauschbar am Eintrittsabschnitt 38 und am Austrittsabschnitt 39 befestigt. Auf diese Weise kann beispielsweise ein beschädigtes oder veraltetes Partikelfilterelement 10 besonders einfach durch ein neues ersetzt werden, da der Mittelabschnitt 37 besonders einfach ausgebaut werden kann, ohne dass das gesamte PF-Modul 3 aus der Abgasanlage 1 ausgebaut werden muss. Auch kann dadurch beim PF-Modul 3 das Partikelfilterelement 10 besonders einfach umgerüstet werden, z.B. von einem Wall-Flow-Partikelfilterelement in ein PM-Katalysatorelement und umgekehrt.

Zweckmäßig sind hierzu die Befestigungselemente 40 als Schnellbefestigungselemente ausgestaltet. Gezeigt sind hier als Schellen ausgestaltete Befestigungselemente 40, die nach außen abstehende, wulstartige Randbereiche an den Stirnseiten der miteinander zu verbindenden Abschnitte 37, 38, 39 ausgebildet sind.

Desweiteren können das SCR-Gehäuse 5 und das PF-Gehäuse 9 schalldämpfend ausgestaltet sein, beispielsweise durch Doppelwände mit dazwischen angeordnetem Dämmmaterial.

## Patentansprüche

1. Abgasanlage für eine Brennkraftmaschine, insbesondere in einem Kraftfahrzeug,
- mit einem SCR-Modul (2), das in einem an einen Abgasstrang angeschlossenen SCR-Gehäuse (5) wenigstens ein SCR-Katalysatorelement (6) enthält,
- mit einem PF-Modul (3), das in einem stromauf des SCR-Gehäuses (5) an den Abgasstrang angeschlossenen PF-Gehäuse (9) wenigstens ein Partikelfilterelement (10) sowie wenigstens ein Pre-Oxidationskatalysatorelement (34) enthält,
- mit einer Brennstoffdosiereinrichtung (32), mit der ein Brennstoff stromauf des wenigstens einen Partikelfilterelements (10) in den Abgasstrom (13) einleitbar ist,
**dadurch gekennzeichnet,**
- **dass** das wenigstens ein Pre-Oxidationskatalysatorelement (34) im PF-Gehäuse (9) stromauf des wenigstens einen Partikelfilterelements (10) angeordnet ist,
- **dass** die Brennstoffdosiereinrichtung (32) am PF-Gehäuse (9) eine Einspritzdüse (33) zum Einleiten des Brennstoffs stromauf des Pre-Oxidationskatalysatorelementes (34) aufweist,
- **dass** das PF-Gehäuse (9) einen Mittelabschnitt (37) aufweist, der zwischen einem einen Abgaseintritt (11) aufweisenden Eintrittabschnitt (38) und einem einen Abgasaustritt (12) aufweisenden Austrittabschnitt (39) angeordnet ist, der das wenigstens eine Partikelfilterelement (10) enthält und der mittels Befestigungselementen (40) austauschbar am Eintrittsabschnitt (38) und am Austrittsabschnitt (39) befestigt ist,
- **dass** der Eintrittsabschnitt (38) das Pre-Oxidationskatalysatorelement (34) enthält,
- **dass** das PF-Modul (3) im PF-Gehäuse (9) wenigstens ein Post-Oxidationskatalysatorelement (35) enthält, das stromab des wenigstens einen Partikelfilterelements (10) angeordnet ist.

2. Abgasanlage nach Anspruch 1,
**dadurch gekennzeichnet,**
- **dass** der Abgasstrang ein Verbindungsrohr (4) aufweist, das einen Abgasaustritt (12) des PF-Gehäuses (9) mit einem Abgaseintritt (7) des SCR-Gehäuses (5) verbindet,
- **dass** das Verbindungsrohr (4) wenigstens ein Entkoppelelement (14) zur mechanischen Entkopplung der beiden Gehäuse (5, 9) aufweist.

3. Abgasanlage nach Anspruch 2,
**dadurch gekennzeichnet,**
- **dass** das Entkoppelelement (14) als flexibles Wellrohr ausgestaltet ist, und/oder
- **dass** das Wellrohr zwischen zwei daran angrenzenden Abschnitten (15, 16) des Verbindungsrohr (4) in das Verbindungsrohr (4) eingesetzt ist, und/oder
- **dass** das Wellrohr aus Metall besteht, und/oder
- **dass** das Wellrohr über Rundflansche (17) mit daran angrenzenden Abschnitten (15, 16) des Verbindungsrohrs (4) verbunden ist.

4. Abgasanlage nach einem der Ansprüche 1 bis 3,
**dadurch gekennzeichnet,**
- **dass** das PF-Modul (3) eine Sensorik (36), insbesondere zur Temperaturmessung und/oder zur Differenzdruckmessung am wenigstens einen Partikelfilterelement (10), aufweist.

5. Abgasanlage nach einem der Ansprüche 1 bis 4,
**dadurch gekennzeichnet,**
**dass** die Befestigungselemente (40) als Schnellbefestigungselemente ausgestaltet sind.

6. Abgasanlage nach einem der Ansprüche 1 bis 5,
**dadurch gekennzeichnet,**
- **dass** das SCR-Modul (2) eine Harnstoffdosiereinrichtung (18) aufweist, mit der Harnstoff stromauf des wenigstens einen SCR-Katalysatorelements (6) in den Abgasstrom (13) einleitbar ist, und/oder
- **dass** das SCR-Modul (2) im SCR-Gehäuse (5) eine Mischstrecke (20) aufweist, die zwischen einer Einleitstelle für Harnstoff und dem wenigstens einen SCR-Katalysatorelement (6) angeordnet ist, und/oder
- **dass** das SCR-Modul (2) ein Eintrittsrohr (21) aufweist, das im SCR-Gehäuse (5) einen Abgaseintritt (7) des SCR-Gehäuses (5) mit einer Eintrittskammer (22) des SCR-Gehäuses (5) verbindet, und/oder
- **dass** das wenigstens eine SCR-Katalysatorelement (6) die Eintrittskammer (22) mit einer Sammelkammer (23) des SCR-Gehäuses (5) verbindet, und/oder
- **dass** das SCR-Modul (2) ein Austrittsrohr (26) aufweist, das im SCR-Gehäuse (5) einen Abgasaustritt (8) des SCR-Gehäuses (5) mit einer Austrittskammer (25) oder mit der Sammelkammer (23) verbindet, und/oder
- **dass** das SCR-Gehäuse (5) eine mit Dämpfermaterial (28) gefüllte Dämpferkammer (27) enthält, die zwischen einer Eintrittskammer (22) und einer Austrittskammer (25) angeordnet ist, und/oder
- **dass** das wenigstens SCR-Katalysatorelement (6) und/oder das Austrittsrohr (26) und/oder das Eintrittsrohr (21) durch eine Dämpferkammer (27) hindurchgeführt ist/sind, und/oder
- **dass** das Austrittsrohr (26) in einem Abschnitt, der in der Dämpferkammer (27) verläuft, für Luftschall durchlässig ausgestaltet ist, insbesondere perforiert, ist, und/oder
- **dass** das SCR-Modul (2) mehrere SCR-Katalysatorelemente (6) enthält, die parallel durchströmbar im SCR-Gehäuse (5) angeordnet sind, und/oder
- **dass** SCR-Modul (2) eine Sensorik, insbesondere zur Messung von Temperatur und/oder NOₓ und/oder NH₃ im Abgasstrom (13), aufweist.

7. Abgasanlage nach einem der Ansprüche 1 bis 6,
**dadurch gekennzeichnet,**
- **dass** das SCR-Modul (2) eine Abgaskühleinrichtung (30) aufweist, die stromab des wenigstens einen SCR-Katalysatorelements (6) angeordnet ist, und/oder
- **dass** die Abgaskühleinrichtung (30) einen von einem Kühlmittel durchströmbaren Kühlkanal aufweist, der mit einer Wandung des Austrittsrohrs (26) wärmeübertragend gekoppelt ist oder in diese integriert ist, und/oder
- **dass** die Abgaskühleinrichtung (30) eine im Austrittsrohr (26) angeordnete oder in eine Wandung des Austrittsrohrs (26) integrierte Düsenanordnung (31) aufweist, durch die ein Kühlmittel in den Abgasstrom (13) einleitbar ist.

8. Abgasanlage nach einem der vorhergehenden Ansprüche,
**dadurch gekennzeichnet,**
**dass** das zweite Abgasbehandlungselement (10) ein Wall-Flow-Partikelfilterelement und/oder ein PM-Katalysatorelement enthält und zusätzlich mit einem Schalldämpferelement ausgestaltet sein kann.

## Claims

1. An exhaust system for a combustion engine, in particular in a motor vehicle,
- with an SCR module (2), which in an SCR housing (5) connected to an exhaust line contains at least one SCR catalytic converter element (6),
- with a PF module (3), which in a PF housing (9) connected to the exhaust line upstream of the SCR housing (5) contains at least one particle filter element (10) as well as at least one pre-oxidation catalytic converter element (34),
- with a fuel metering device (32) with which a fuel can be fed into the exhaust gas flow (13) upstream of the at least one particle filter element (10),
**characterized in that**
- the at least one pre-oxidation catalytic converter element (34) is arranged in the PF housing (9) upstream of the at least one particle filter element (10),
- the fuel metering device (32) on the PF housing (9) has an injection nozzle (33) for feeding in the fuel upstream of the pre-oxidation catalytic converter element (34),
- the PF housing (9) has a middle section (37) which is arranged between an entry section (38) having an exhaust gas entry (11) and an exit section (39) having an exhaust gas exit (12), which contains the at least one particle filter element (10) and which is replaceably fastened to the entry section (38) and to the exit section (39) by means of fastening elements (40),
- the entry section (38) contains the pre-oxidation catalytic converter element (34),
- the PF module (3) in the PF housing (9) contains at least one post-oxidation catalytic converter element (35) which is arranged downstream of the at least one particle filter element (10).

2. The exhaust system according to Claim 1,
**Characterized in that**
- the exhaust line has a connecting pipe (4) which connects an exhaust exit (12) of the PF housing (9) with an exhaust entry (7) of the SCR housing (5),
- the connecting pipe (4) has at least one decoupling element (14) for the mechanical decoupling of the two housings (5, 9).

3. The exhaust system according to Claim 2,
**characterized in that**
- the decoupling element (14) is configured as flexible corrugated pipe, and/or
- the corrugated pipe is inserted into the connecting pipe (4) between two sections (15, 16) of the connecting pipe (4) adjoining it, and/or
- the corrugated pipe consists of metal, and/or,
- the corrugated pipe is connected to sections (15, 16) of the connecting pipe (4) adjoining it via round flanges (17).

4. The exhaust system according to one of Claims 1 to 3,
**characterized in that**
- the PF module (3) has a sensing device (36), in particular for the temperature measurement and/or for the differential pressure measurement on the at least one particle filter element (10).

5. The exhaust system according to one of Claims 1 to 4,
**characterized in that**
the fastening elements (40) are configured as quick fastening elements.

6. The exhaust system according to one of Claims 1 to 5,
**characterized in that**
- the SCR module (2) has a urea metering device (18) with which urea can be fed into the exhaust gas flow (13) upstream of the at least one SCR catalytic converter element (6), and/or
- the SCR module (2) in the SCR housing (5) has a mixing section (20) which is arranged between a feeding point for urea and the at least one SCR catalytic converter element (6), and/or
- the SCR module (2) has an entry pipe (21) which in the SCR housing (5) connects an exhaust gas entry (7) of the SCR housing (5) to an entry chamber (22) of the SCR housing (5), and/or
- the at least one SCR catalytic converter element (6) connects the entry chamber (22) to a collecting chamber (23) of the SCR housing (5), and/or
- the SCR module (2) has an exit pipe (26) which in the SCR housing (5) connects an exhaust gas exit (8) of the SCR housing (5) to an exit chamber (25) or to the collecting chamber (23), and/or
- the SCR housing (5) contains a damping chamber (27) filled with damping material (28) which is arranged between an entry chamber (22) and an exit chamber (25) and/or
- the at least one SCR catalytic converter element (6) and/or the exit pipe (26) and/or the entry pipe (21) is/are passed through a damping chamber (27) and/or
- the exit pipe (26) in a section running in the damping chamber (27) is configured so as to be permeable to airborne sound, in particular perforated, and/or
- the SCR module (2) contains a plurality of SCR catalytic converter elements (6) which are arranged in the SCR housing (5) so that parallel flow through these is possible and/or
- the SCR module (2) has a sensing device in particular for the measurement of temperature and/or NOₓ and/or NH₃ in the exhaust gas flow (13).

7. The exhaust system according to one of Claims 1 to 6,
**characterized in that**
- the SCR module (2) has an exhaust gas cooling device (30) which is arranged downstream of the at least one SCR catalytic converter element (6), and/or
- the exhaust gas cooling device (30) has a cooling channel through which a coolant can flow, which is coupled to or integrated in a wall of the exit pipe (26) in a heat transmitting manner, and/or
- the exhaust gas cooling device (30) has a nozzle arrangement (31) arranged in the exit pipe (26) or integrated in a wall of the exit pipe (26), through which a coolant can be fed into the exhaust gas flow (13).

8. The exhaust system according to one of the preceding claims,
**characterized in that**
the second exhaust gas treatment element (10) contains a wall-flow particle filter element and/or a PM catalytic converter element and additionally can be configured with a silencer element.

## Revendications

1. Système d'échappement pour un moteur à combustion interne, en particulier dans un véhicule automobile,
- avec un module SCR (2) contenant au moins un élément de catalyseur SCR (6) dans un boîtier SCR (5) raccordé à une ligne d'échappement,
- avec un module PF (3) contenant au moins un élément de filtration de particules (10) ainsi qu'au moins un élément de catalyseur à préoxydation (34), dans un boîtier PF (9) raccordé à la ligne d'échappement, en amont du boîtier SCR (5),
- avec un dispositif de dosage de carburant (32) permettant de guider un carburant dans le flux de gaz d'échappement (13), en amont de l'au moins un élément de filtration de particules (10),
**caractérisé en ce que**
- l'au moins un élément de catalyseur à préoxydation (34) est installé dans le boîtier PF (9), en amont de l'au moins un élément de filtration de particules (10),
- le dispositif de dosage de carburant (32) comporte un injecteur (33) sur le boîtier PF (9), pour l'injection du carburant, en amont de l'élément de catalyseur à préoxydation (34),
- le boîtier PF (9) comporte une section centrale (37), installée entre une section d'entrée (38) comportant une entrée de gaz d'échappement (11) et une section de sortie (39) comportant une sortie de gaz d'échappement (12), laquelle contient l'au moins un élément de filtration de particules (10) et est fixée de manière remplaçable sur la section d'entrée (38) et la section de sortie (39), au moyen d'éléments de fixation (40),
- la section d'entrée (38) contient l'élément de catalyseur à préoxydation (34)
- le module PF (3) dans le boîtier PF (9) contient au moins un élément de catalyseur à post oxydation (35), qui est disposé en aval de l'au moins un élément de filtration de particules (10).

2. Système d'échappement selon la revendication 1,
**caractérisé en ce que**
- la ligne d'échappement comporte une conduite de liaison (4) reliant une sortie de gaz d'échappement (12) du boîtier PF (9) avec une entrée de gaz d'échappement (7) du boîtier SCR (5),
- la conduite de liaison (4) comporte au moins un élément de désaccouplement (14), pour le désaccouplement mécanique des deux boîtiers (5, 9).

3. Système d'échappement selon la revendication 2,
**caractérisé en ce que**
- l'élément de désaccouplement (14) est conçu comme un tube ondulé souple, et/ou
- **en ce que** le tube ondulé est installé dans la conduite de liaison (4), entre deux sections (15, 16) de la conduite de liaison (4), adjacentes à celui-ci, et/ou
- **en ce que** le tube ondulé est constitué de métal, et/ou
- **en ce que** le tube ondulé est relié à des sections (15, 16) de la conduite de liaison (4) adjacentes à celui-ci, par le biais de brides rondes (17).

4. Système d'échappement selon l'une des revendications 1 à 3,
**caractérisé en ce que**
- **en ce que** le module PF (3) comporte un système de détection (36), en particulier pour la mesure de température et/ou la mesure de différence de pression sur l'au moins un élément de filtration de particules (10).

5. Système d'échappement selon l'une des revendications 1 à 4,
**caractérisé en ce que**
les éléments de fixation (40) sont conçus comme des éléments de fixation rapide.

6. Système d'échappement selon l'une des revendications 1 à 5,
**caractérisé en ce que**
- le module SCR (2) comporte un dispositif de dosage d'urée (18), permettant d'alimenter de l'urée dans le flux de gaz d'échappement (13), en amont de l'au moins un élément de catalyseur SCR (6), et/ou
- **en ce que** le module SCR (2) dans le boîtier SCR (5) comporte une section de mélange (20) installée entre un point d'entrée pour l'urée et l'au moins un élément de catalyseur SCR (6), et/ou
- le module SCR (2) comporte une conduite d'entrée (21) reliant, dans le boîtier SCR (5), une entrée de gaz d'échappement (7) du boîtier SCR (5) avec une chambre d'entrée (22) du boîtier SCR (5), et/ou
- **en ce que** l'au moins un élément de catalyseur SCR (6) relie la chambre d'entrée (22) avec une chambre de collecte (23) du boîtier SCR (5), et/ou
- **en ce que** le module SCR (2) comporte une conduite de sortie (26) reliant une sortie de gaz d'échappement (8) du boîtier SCR (5) avec une chambre de sortie (25) ou avec une chambre de collecte (23), dans le boîtier SCR (5), et/ou
- **en ce que** le boîtier SCR (5) contient une chambre d'amortissement (27) remplie d'un matériau amortisseur (28), installée entre une chambre d'entrée (22) et une chambre de sortie (25), et/ou
- **en ce que** l'au moins un élément de catalyseur SCR (6) et/ou la conduite de sortie (26) et/ou la conduite d'entrée (21) est/sont guidé(es) à travers une chambre d'amortissement (27), et/ou
- **en ce que** la conduite de sortie (26) est conçue de manière à laisser passer le bruit aérien, en particulier de manière à être perforée, dans une section s'étendant dans la chambre d'amortissement (27), et/ou
- **en ce que** le module SCR (2) contient plusieurs éléments de catalyseur SCR (6), installés dans le boîtier SCR (5) et aptes à être traversés parallèlement, et/ou
- **en ce que** le module SCR (2) comporte un système de détection, en particulier pour la mesure de température et/ou de NOₓ et/ou de NH₃ dans le flux de gaz d'échappement (13).

7. Système d'échappement selon l'une des revendications 1 à 6,
**caractérisé en ce que**
- le module SCR (2) comporte un dispositif de refroidissement (30), installé en aval de l'au moins un élément de catalyseur SCR (6), et/ou
- **en ce que** le dispositif de refroidissement (30) comporte un canal de refroidissement susceptible d'être traversé par un liquide de refroidissement, qui est accouplé à une paroi de la conduite de sortie (26) ou encore intégré dans celle-ci, de manière à transmettre la chaleur, et/ou
- **en ce que** le dispositif de refroidissement (30) comporte un ensemble de buse (31), intégré dans une paroi de la conduite de sortie (26) ou installé dans la conduite de sortie (26), permettant d'alimenter un liquide de refroidissement dans le flux de gaz d'échappement (13).

8. Système d'échappement selon l'une des revendications précédentes,
**caractérisé en ce que**
le deuxième élément de traitement de gaz d'échappement (10) contient un élément de filtration de particules Wall-flow et/ou un élément de catalyseur PM, et peut en outre être conçu avec un élément de silencieux.
